# EUROPÄISCHE PATENTANMELDUNG

(11) **EP 3 170 695 A1**
(43) Veröffentlichungstag der Anmeldung: **24.05.2017**
(21) Anmeldenummer: 16194713.0
(22) Anmeldetag: 20.10.2016
(51) Int. Cl.: B60N 2/68

(54) **SITZ MIT RÜCKENLEHNE**

(30) Priorität: 19.11.2015 DE 102015120069
(71) Anmelder: Scheidt, Markus, 32120 Oetinghausen (DE)
(72) Erfinder: Scheidt, Markus, 32120 Oetinghausen (DE)
(74) Vertreter: Ter Meer Steinmeister & Partner

(57) **Zusammenfassung**

Sitz mit einer Rückenlehne (12), die eine Rückwand (14) aus halbsteifem Kunststoffmaterial aufweist, dadurch gekennzeichnet, dass die Rückwand (14) eine Hohlkammer-Stegplatte aus Kunststoff aufweist.

## Beschreibung

Die Erfindung betrifft einen Sitz mit einer Rückenlehne, die eine Rückwand aus halbsteifem Kunststoffmaterial aufweist.

Insbesondere befasst sich die Erfindung mit Rückenlehnen für Fahrzeugsitze.

Beispiele für Fahrzeugsitze mit einer Rückwand aus Kunststoffmaterial werden in GB 859 314 sowie in WO 2010/092048 A1 beschrieben. Bei den meisten heute gebräuchlichen Fahrzeugsitzen besteht die Rückwand jedoch aus Pappe.

Aufgabe der Erfindung ist es, eine Rückwand mit geringem Gewicht und gleichzeitig hoher Stabilität und Haltbarkeit zu schaffen.

Diese Aufgabe wird erfindungsgemäß dadurch gelöst, dass die Rückwand eine Hohlkammer-Stegplatte aus Kunststoff aufweist.

Hohlkammer-Stegplatten aus Kunststoff sind als solche bekannt und weisen zwei parallele Wände auf, die durch Stege miteinander verbunden sind, so dass die Stege den

Zwischenraum zwischen den beiden Wänden in eine Vielzahl von Hohlkammern unterteilen. Beispielsweise beschreibt DE 10 2004 045 278 A1 eine Hohlkammer-Stegplatte, die als Dehnungsfugenstreifen in der Bauindustrie eingesetzt wird.

Aufgrund der Hohlkammerstruktur weist die Rückwand im Verhältnis zu ihrem Gewicht eine hohe Verformungssteifigkeit auf, so dass sie in der Lage ist, die Polsterung einer Sitz-Rückenlehne sauber zu verkleiden, und zugleich widerstandsfähig gegen mechanische Beschädigungen ist, wodurch insbesondere der Ein- und Ausbau der Rückwand erleichtert wird. Darüber hinaus gibt die Hohlkammer-Stegplatte der Rückwand auch dann, wenn sie nicht durch einen Bezug verkleidet ist, ein ansprechendes und hochwertiges Erscheinungsbild. Das geringe Gewicht ist insbesondere bei Fahrzeugsitzen von Vorteil, da es zur Verringerung des Gesamtgewichts des Fahrzeugs und damit zur Senkung des Energieverbrauchs beiträgt.

Vorteilhafte Ausgestaltungen der Erfindung sind in den Unteransprüchen angegeben.

In einer vorteilhaften Ausführungsform weist die Hohlkammer-Stegplatte eine Mikroperforation auf, wodurch eine gewisse Luftdurchlässigkeit und Atmungsaktivität erreicht wird. Vorzugsweise ist in jeder der beiden Wände, die eine einzelne Hohlkammer nach außen begrenzen, mindestens eine Reihe von Mikroporen vorgesehen, die einen Durchmesser von beispielsweise 0,2 bis 1,0 mm haben können. Die Poren können beispielsweise in einem quadratischen Raster angeordnet sein, mit einem Porenabstand in der Größenordnung von etwa 3 bis 5 mm.

Die Hohlkammer-Stegplatten können beispielsweise zunächst ohne Mikroperforation im Extrusionsverfahren aus Kunststoff hergestellt werden. In einem weiteren Schritt lässt man dann das extrudierte Profil durch einen Spalt zwischen zwei Perforationswalzen laufen, mit denen die Mikroporen in den Außenwänden der Platten hergestellt werden.

Ein besonders geeignetes Kunststoffmaterial für die Hohlkammer-Stegplatte ist Polypropylen, das vorzugsweise durch geeignete Additive flammhemmend ausgerüstet ist.

Bei einem gepolsterten Sitz, insbesondere einem Fahrzeugsitz, kann eine solche Hohlkammer-Stegplatte analog auch als Bodenwand unterhalb der Polsterung des Sitzkissens verwendet werden.

Gegenstand der Erfindung ist deshalb allgemein auch die Verwendung einer Hohlkammer-Stegplatte aus Kunststoff als Wandelement in einem gepolsterten Sitz, insbesondere einem Fahrzeugsitz.

Im folgenden wird ein Ausführungsbeispiel anhand der Zeichnung näher erläutet.

Es zeigen:
- Fig. 1: eine perspektivische Ansicht eines gemäß der Erfindung ausgebildeten Fahrzeugsitzes;
- Fig. 2: einen Umriss einer Rückwand des Sitzes nach Fig. 2; und
- Fig. 3: einen vergrößerten Schnitt längs der Linie III-III in Fig. 2.

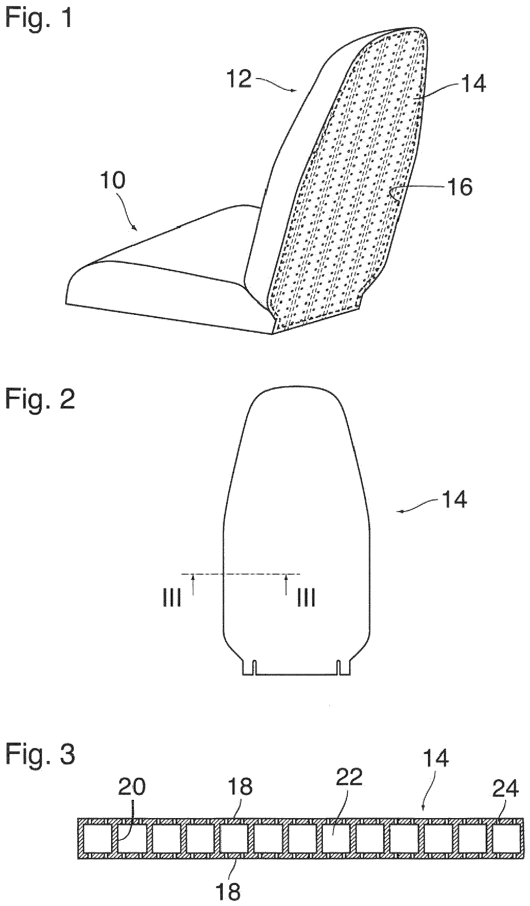

In Fig. 1 ist ein gepolsterter Sitz gezeigt, beispielsweise ein Fahrzeugsitz, der ein Sitzkissen 10 und eine gleichfalls gepolsterte Rückenlehne 12 aufweist. Die Polsterung der Rückenlehne 12 wird an der Rückseite durch eine Rückwand 14 verkleidet, die in bekannter Weise an einem die Rückenlehne aussteifenden Rahmen 16 befestigt ist.

Die Rückwand 14 wird durch eine mikroperforierte Hohlkammer-Stegplatte aus Polypropylen gebildet. Die Stege und Mikroporen sind in Fig. 1 schematisch angedeutet, jedoch unmaßstäblich groß dargestellt.

In Fig. 2 ist die Rückwand 14 gesondert dargestellt, so dass die an den Umriss der Rückenlehne 12 angepasste Kontur zu erkennen ist.

Fig. 3 zeigt einen Teilschnitt durch die Hohlkammer-Stegplatte, die die Rückwand 14 bildet. Die Stegplatte weist zwei parallele Wände 18 auf, von denen eine in der Einbauposition nach Fig. 1 der Polsterung der Rückenlehne zugewandt ist, während die andere die Außenfläche der Rückenlehne bildet. Die Wände 18 sind in regelmäßigen Abständen durch Stege 20 miteinander verbunden, die materialeinheitlich an die Wände 18 anschließen und den Zwischenraum zwischen diesen Wänden in eine Serie von Hohlkammern 22 mit einem beispielsweise quadratischen Querschnitt unterteilen. Innerhalb jeder Hohlkammer 22 weisen die beiden Wände 18 jeweils mindestens eine Reihe von Mikroporen 24 auf.

Die Mikroporen haben in diesem Beispiel einen Durchmesser von etwa 0,2 mm. Die Gesamtdicke der Stegplatte, also der Abstand zwischen den Wänden 18 beträgt weniger als 2 mm, beispielsweise etwa 1 - 1,5 mm, so dass die Platte trotz der Verstärkung durch die Stege noch ähnlich flexibel ist wie etwa eine Pappe.

Die gesamte Rückwand 14 ist vorzugsweise in einem Stück aus Kunststoff, vorzugsweise aus Polypropylen hergestellt. Das Kunststoffmaterial ist durch geeignete Additive flammhemmend ausgerüstet, so dass in Kraftfahrzeugen die Brandgefahr reduziert wird.

## Patentansprüche

1. Sitz mit einer Rückenlehne (12), die eine Rückwand (14) aus halbsteifem Kunststoffmaterial aufweist, **dadurch gekennzeichnet, dass** die Rückwand (14) eine Hohlkammer-Stegplatte aus Kunststoff aufweist.

2. Sitz nach Anspruch 1, bei dem die Hohlkammer-Stegplatte Mikroporen (24) in ihren beiden parallelen, durch Stege (20) verbundenen Wänden (18) aufweist.

3. Sitz nach Anspruch 2, bei dem die Mikroporen (24) einen Durchmesser von 1,0 mm oder weniger, vorzugsweise einen Durchmesser von 0,2 mm haben.

4. Sitz nach einem der Ansprüche 1 bis 3, bei dem die Hohlkammer-Stegplatte aus Polypropylen besteht.

5. Sitz nach einem der vorstehenden Ansprüche, bei dem das Material der Hohlkammer-Stegplatte flammhemmend ausgerüstet ist.

6. Verwendung einer Hohlkammer-Stegplatte aus Kunststoff, die zwei parallele, durch Stege (20) verbundene Wände (18) aufweist, als Wandelement (14) in einem gepolsterten Sitz.

7. Verwendung nach Anspruch 6, bei der die Hohlkammer-Stegplatte Mikroporen (24) in ihren beiden parallelen, durch Stege (20) verbundenen Wänden (18) aufweist.

8. Verwendung nach Anspruch 7, bei der die Mikroporen (24) einen Durchmesser von 1,0 mm oder weniger, vorzugsweise einen Durchmesser von 0,2 mm haben.

9. Verwendung nach einem der Ansprüche 6 bis 8, bei der das Wandelement eine Rückwand (14) einer Rückenlehne (12) des Sitzes ist.

10. Verwendung nach einem der Ansprüche 6 bis 8, bei der das Wandelement eine Bodenwand eines Sitzkissens (12) des Sitzes ist, die eine Polsterung des Sitzkissens nach unten abschließt.
